(19) Europäisches Patentamt / European Patent Office / Office européen des brevets

(11) **EP 2 483 964 B1**

(12) **FASCICULE DE BREVET EUROPEEN**

(45) Date de publication et mention
de la délivrance du brevet:
**04.11.2020 Bulletin 2020/45**

(21) Numéro de dépôt: **10769017.4**

(22) Date de dépôt: **22.09.2010**

(51) Int Cl.:
*H01M 2/02* (2006.01)   *H01M 2/30* (2006.01)
*H01M 4/04* (2006.01)   *H01M 4/134* (2010.01)
*H01M 4/1395* (2010.01)   *H01M 4/70* (2006.01)
*H01M 4/72* (2006.01)   *H01M 12/08* (2006.01)

(86) Numéro de dépôt international:
**PCT/FR2010/051984**

(87) Numéro de publication internationale:
**WO 2011/039449 (07.04.2011 Gazette 2011/14)**

(54) **COMPARTIMENT NEGATIF RIGIDE POUR BATTERIE METAL-AIR ET PROCEDE DE FABRICATION DE CELUI-CI**

STARRES, NEGATIVES FACH FÜR METALL-LUFT-BATTERIE UND VERFAHREN ZUR HERSTELLUNG DES BESAGTEN FACHS

RIGID NEGATIVE COMPARTMENT FOR A METAL-AIR BATTERY AND METHOD OF MANUFACTURING SAID COMPARTMENT

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **30.09.2009 FR 0956772**

(43) Date de publication de la demande:
**08.08.2012 Bulletin 2012/32**

(73) Titulaires:
• **Electricité de France**
  **75008 Paris (FR)**
• **SAFT**
  **93170 Bagnolet (FR)**
• **Institut Polytechnique de Bordeaux**
  **33402 Talence Cedex (FR)**

(72) Inventeurs:
• **TOUSSAINT, Gwenaëlle**
  **77140 Nemours (FR)**
• **STEVENS, Philippe**
  **77940 Noisy Rudignon (FR)**
• **CAILLON, Georges**
  **33520 Bruges (FR)**
• **VIAUD, Patrick**
  **33460 Margaux (FR)**
• **CANTAU, Christophe**
  **40300 Peyrehorade (FR)**
• **VINATIER, Philippe**
  **33800 Bordeaux (FR)**

(74) Mandataire: **Plasseraud IP**
  **66, rue de la Chaussée d'Antin**
  **75440 Paris Cedex 09 (FR)**

(56) Documents cités:
WO-A2-2007/021717   US-A1- 2005 095 506
US-A1- 2007 051 620   US-A1- 2007 259 234
US-A1- 2008 268 327

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 483 964 B1

## Description

L'invention concerne un nouveau procédé de fabrication d'un compartiment rigide d'électrode négative pour batteries métal-air, en particulier pour batteries lithium-air, un précurseur de compartiment d'électrode négative permettant de mettre en œuvre ce procédé, un compartiment d'électrode négative obtenu par ce procédé ainsi qu'une batterie métal-air contenant un tel compartiment.

La densité d'énergie massique (exprimée en Wh/kg) des batteries reste la principale limitation pour leur utilisation dans les équipements portables, tels que l'électronique portable ou les véhicules électriques. La limitation énergétique de ces batteries est en grande partie liée aux performances des matériaux qui la composent. Les matériaux d'électrode négative actuellement disponibles ont généralement une capacité spécifique comprise entre 300 à 350 Ah/kg. Celle-ci est de l'ordre de 100 à 150 Ah/kg seulement pour les matériaux de l'électrode positive.

L'avantage des systèmes métal-air (lithium-air ou sodium-air) réside dans l'utilisation d'une électrode positive de capacité infinie. L'oxygène consommé à l'électrode positive n'a pas besoin d'être stocké dans l'électrode mais peut être prélevé dans l'air ambiant. La capacité de la batterie dépend alors uniquement de la capacité de l'électrode négative et de la capacité à stocker le produit de la réaction.

L'électrode à air a besoin d'un milieu aqueux, basique ou acide, pour pouvoir fonctionner de façon optimale. Malheureusement, le lithium métallique ou le sodium métallique utilisé pour l'électrode négative est trop réactif vis-à-vis de l'eau et sa formation, au cours de la recharge, en présence d'eau, même à l'état de trace, est impossible car la réduction de l'eau s'opère à des tensions beaucoup plus faibles, empêchant la formation de lithium ou sodium métal. Une barrière physique étanche à l'eau est donc nécessaire entre le compartiment d'électrode négative à base de lithium ou sodium métal et le compartiment d'électrode positive contenant un électrolyte aqueux. Cette barrière physique étanche à l'eau doit toutefois laisser passer les cations métalliques de l'électrolyte aqueux vers l'électrode négative et dans le sens inverse.

On connaît depuis un certain temps sous la dénomination « Li Super Ionic Conductor » (LISICON) ou « Na Super Ionic Conductor » (NASICON), une famille de matériaux céramiques qui répondent à ces exigences. Ces matériaux ont des conductivités avantageusement élevées allant jusqu'à $10^{-4}$ voire $10^{-3}$ S/cm à 25 °C et présentent une bonne stabilité chimique vis-à-vis de l'électrolyte aqueux dans le compartiment d'électrode positive (électrode à air). Toutefois, leur réactivité avec le lithium ou sodium métallique dans le compartiment anodique est très importante et il est indispensable de les isoler du lithium ou sodium métallique par un revêtement de protection, par exemple à base d'un verre d'oxynitrure de phosphore et de lithium (LiPON) ou d'oxynitrure de phosphore et de sodium (NaPON).

La demande internationale WO 2007/021717 décrit un compartiment d'électrode négative étanche à l'eau, contenant une superposition d'un collecteur de courant sur lequel est appliquée une couche de lithium métal en tant que matière active, puis une membrane céramique conductrice d'ions lithium imperméable à l'eau. L'étanchéité de ce système est assurée par un système de joints flexibles en polymère (voir notamment Fig 1A de WO 2007/021717). La fabrication d'un tel compartiment implique le collage de la matière active (lithium métallique) sur le collecteur de courant d'un côté et sur la membrane céramique de l'autre, et doit être mise en œuvre dans une boîte à gants ou en chambre sèche (*dry room*) ce qui constitue une contrainte importante. Par ailleurs, les auteurs de cette demande n'ont pas apporté la preuve de la rechargeabilité du système décrit. Les joints plastiques assurant l'étanchéité du système sont souples et donnent une mobilité à la membrane céramique pour permettre la variation du volume du compartiment due à la consommation et la récupération du lithium métallique au cours des cycles de décharge et recharge respectivement. Ainsi, lorsque la batterie est déchargée, la membrane céramique est tenue uniquement par les joints souples non tendus. En l'absence de tout support mécanique elle doit donc, pour résister à d'éventuelles contraintes mécaniques, être relativement épaisse ce qui est désavantageux non seulement en termes de coût de production, mais surtout en termes de résistance ionique de cette membrane.

En effet, le rendement électrique d'une pile est en partie gouverné par la résistance de l'électrolyte. Cette résistance spécifique (R) est exprimée par la formule

$$R = (r_* e)/A,$$

où r désigne la résistivité de l'électrolyte, e son épaisseur et A sa surface. Plus l'épaisseur de l'électrolyte sera faible, meilleur sera le rendement énergétique de la pile.

Le document US2007/0051620 décrit un compartiment d'anode protégée pour une batterie métal-air rechargeable, le compartiment comprenant un boîtier rigide.

La Demanderesse a mis au point un nouveau compartiment d'électrode négative qui présente par rapport à celui décrit dans WO 2007/021717 l'avantage de présenter, non pas des joints souples, mais une coque rigide, également appelée ci-après boîtier rigide. Dans le compartiment selon l'invention, l'électrolyte solide qui est du même type que celui utilisé dans WO 2007/021717, est ainsi tenu par une structure rigide formant un cadre entourant et stabilisant la membrane d'électrolyte solide qui, de ce fait, peut être prévue avec des épaisseurs nettement plus faibles. Par ailleurs, le compartiment d'électrode négative de la présente invention est conçu de manière à pouvoir être fabriqué dans un environnement non contrôlé, c'est-à-dire hors d'une boîte à gants ou d'une chambre sèche. Le procédé de fabrication du compartiment d'électrode négative prévoit en effet l'introduction du métal actif (lithium ou sodium) non pas par collage ou évaporation d'une couche de métal actif sur le collecteur de courant et/ou l'électrolyte solide, mais par une réaction électrochimique décrite en détail ci-après, au cours de laquelle le lithium métal ou le sodium métal n'entre pas en contact avec l'atmosphère mais est formé *in situ*, à l'intérieur du compartiment de l'électrode négative étanche à l'air et à l'eau.

Ce procédé nouveau et avantageux est mis en œuvre sur un dispositif qui sera appelé ci-après un «précurseur de compartiment d'électrode négative ». Ce précurseur correspond au compartiment d'électrode négative « vide », c'est-à-dire ne contenant pas encore le métal actif. Ce n'est qu'au cours d'une étape de réaction électrochimique que le métal actif est introduit, sous forme de cations, depuis un électrolyte aqueux, pour être réduit par et fixé sur le collecteur de courant de l'anode (électrode négative), à l'abri de l'humidité et de l'atmosphère externe.

La présente invention a par conséquent pour objet un précurseur de compartiment d'électrode négative pour batteries métal-air rechargeables, un procédé de fabrication d'un compartiment d'électrode négative utilisant un tel précurseur et le compartiment d'électrode obtenu ou susceptible d'être obtenu par ce procédé.

Le précurseur de compartiment d'électrode négative de la présente invention comprend :

(a) un boîtier rigide en résine, ouvert sur au moins un de ses côtés,
(b) au moins une membrane d'électrolyte solide conducteur d'ions alcalins fermant complètement et de manière étanche le ou les côté(s) ouvert(s) du boîtier rigide,
(c) au moins un revêtement de protection inerte vis-à-vis des métaux alcalins recouvrant de préférence complètement la face intérieure de la membrane d'électrolyte solide,
(d) au moins un collecteur de courant métallique en forme de feuille, de revêtement déposé sur la face intérieure du revêtement de protection, ledit collecteur de courant recouvrant presque toute la face intérieure de ce revêtement de protection sans toutefois être en contact, au niveau de ses bords, avec le boîtier rigide, et
(e) au moins un conducteur électronique souple en forme de grille ou de feuille, traversant de manière étanche une des parois du boîtier rigide et relié au collecteur de courant.

Le boîtier rigide peut avoir n'importe quelle forme appropriée permettant de l'intégrer dans une batterie métal-air. Il peut avoir par exemple une forme parallélépipédique ou cylindrique. La présente description a été faite en prenant comme exemple un boîtier de forme parallélépipédique.

Le boîtier rigide formant et délimitant, avec la membrane d'électrolyte solide, le compartiment d'électrode négative est en résine synthétique, de préférence en une résine thermodurcie ou durcie à froid. La nature chimique de cette résine n'est pas déterminante à condition qu'elle n'interagisse pas de manière désavantageuse avec les composants contenus à l'intérieur du compartiment ou avec l'électrolyte liquide du compartiment de l'électrode positive. Une fois durcie, la résine doit présenter une résistance mécanique suffisante pour conférer à l'ensemble la rigidité nécessaire.

On peut citer à titre d'exemples de résines durcis sables les résines époxyde, polyesters insaturés, phénoliques et polyimides. La Demanderesse a utilisé avec succès la résine d'enrobage Epofix® commercialisée par la société Struers. Il s'agit d'une résine époxy, liquide, qui durcit à froid après ajout d'un durcisseur.

Le mode de fabrication du précurseur de compartiment d'électrode négative par coulée d'une résine liquide dans un moule contenant la membrane d'électrolyte solide fait que les parois en résine du compartiment sont en contact étanche avec l'électrolyte solide et aucun joint additionnel ne sera nécessaire.

La membrane d'électrolyte solide est de préférence une membrane céramique conductrice d'ions sodium ou d'ions lithium, de préférence d'ions lithium.

De telles membranes céramiques conductrices d'ions métalliques sont connues et sont commercialisées par exemple sous les dénominations *Lithium Ion Conducting Glass Ceramic* (LIC-GC) par la société Ohara Inc., Japon. Il s'agit de céramiques de formule $Li_{1-x}(M, Ga, Al)_x(Ge_{1-y}Ti_y)_{2-x}(PO_4)_3$ où M est un ou plusieurs métaux choisis parmi Nd, Sm, Eu, Gd, Tb, Dy, Ho, Er, Tm et Yb. Ce type de membranes céramiques sont également connues dans la littérature sous la dénomination LISICON (*Li Super Ionic Conductor*).

Il existe également des céramiques similaires conductrices d'ions sodium de formule $Na_{1+x}Zr_2Si_xP_{3-x}O_{12}$ où $0 \leq x \leq 3$. Ces céramiques conductrices d'ions métalliques sont décrites notamment dans le brevet US 6 485 622 et dans l'article de N. Gasmi et al, J. of Sol-Gel Science and Technology 4(3), 231 - 237, et sont connues dans la littérature sous la dénomination NASICON (*Na Super Ionic Conductor*).

Grâce à l'encadrement de cette membrane céramique d'électrolyte solide sur toute sa périphérie par la structure rigide du boîtier, l'épaisseur de l'électrolyte solide peut avantageusement être relativement plus faible que dans une structure souple du type de celle décrite dans WO 2007/021717. La membrane d'électrolyte solide utilisée dans la présente invention a avantageusement une épaisseur comprise entre 30 μm et 500 μm, de préférence entre 50 μm et 160 μm. Bien entendu, cette épaisseur peut être d'autant plus faible que la surface totale de la membrane est faible.

Par contre, pour des surfaces significativement plus grandes que quelques cm$^2$, l'épaisseur de la membrane doit être augmentée en conséquence ou bien la membrane doit être renforcée et soutenue par une structure de renforcement, par exemple des barres ou une grille en résine, collée sur la membrane, cette structure laissant libre la plus grande surface de la membrane, c'est-à-dire au moins 80 %, de préférence au moins 90 % de la surface de la membrane d'électrolyte solide.

La membrane d'électrolyte solide est couverte sur au moins une partie de sa surface intérieure et de préférence sur toute sa surface intérieure (c'est-à-dire sur sa surface tournée vers l'intérieur du compartiment d'électrode négative) d'un revêtement de protection destiné à protéger l'électrolyte solide du métal actif (lithium ou sodium) introduit dans le compartiment d'électrode négative au moment de la fabrication dudit compartiment ou à chaque recharge de la batterie. Ce revêtement doit bien entendu être non seulement inerte vis-à-vis du métal actif et de l'électrolyte solide mais doit bien évidemment, comme l'électrolyte solide, être conducteur d'ions de métaux alcalins (Li$^+$, Na$^+$). Bien qu'il ne soit pas indispensable de protéger toute la surface interne de la membrane d'électrolyte solide, celle-ci doit absolument être couverte du revêtement protecteur sur les zones susceptibles de venir en contact avec le lithium ou sodium métallique.

De tels revêtements sont connus. On peut citer à titre d'exemples de revêtements conducteurs d'ions lithium les revêtements à base de Li$_3$N, Li$_3$P, LiI, LiBr, LiF ou d'oxynitrure de lithium et de phosphore (LiPON) (voir par exemple X. Yu et al., J. Electrochem. Soc. (1997) 144(2), page 524), et à titre d'exemples de revêtements conducteurs d'ions sodium les revêtements à base de verre, par exemple un verre borosilicaté avec ajout de Na$_2$O ou d'oxynitrure de sodium et de phosphore (NaPON) (voir par exemple S. Chun et al, Proc. 124th Meeting Electrochem Soc., (2008), 195). Parmi ces revêtements, on préfère en particulier le LiPON pour les batteries lithium-air et le NaPON pour les batteries sodium-air. Il va de soi que les revêtements protecteurs conducteurs d'ions lithium doivent être utilisés en combinaison avec un électrolyte solide conducteur de lithium et les revêtements protecteurs conducteurs de sodium avec un électrolyte solide conducteur d'ions sodium.

Ce revêtement est déposé sur la membrane d'électrolyte solide avant la coulée de la résine formant, après durcissement, le boîtier rigide. Lorsque ce revêtement protecteur couvre toute la surface de la membrane d'électrolyte solide, il est par conséquent pris, comme cette dernière, sur toute sa périphérie dans la résine formant ainsi un écran étanche entre la membrane d'électrolyte solide et l'espace intérieur du compartiment rigide destiné à recevoir le métal actif.

Un collecteur de courant métallique en forme de feuille, de revêtement ou de plaque mince est appliqué ou déposé directement sur le revêtement de protection, par exemple par pulvérisation cathodique. Ce collecteur de courant métallique est de préférence déposé sur le revêtement de protection avant la coulée et le durcissement de la résine formant le boîtier rigide.

Le collecteur de courant peut être en n'importe quel métal stable à l'air permettant une bonne conduction électronique quand il est déposé en couche mince. On utilisera de préférence dans la présente invention un collecteur de courant en acier inoxydable.

Bien que le collecteur de courant recouvre presque toute la face libre du revêtement de protection, il est important de veiller à ce que ce recouvrement ne soit pas total et que le collecteur de courant ne soit pas en contact physique avec les parois du boîtier rigide. En effet, au moment de la fabrication du compartiment d'électrode négative à partir du précurseur décrit ici, le métal actif sera introduit, via l'électrolyte solide et le revêtement de protection et se déposera en une couche d'épaisseur uniforme sur le collecteur de courant, entre celui-ci et le revêtement de protection. Lors de cette introduction du métal actif, étant donné que la position du revêtement de protection est fixe, le collecteur de courant se déplacera progressivement en s'éloignant du revêtement de protection au fur et à mesure que l'épaisseur du dépôt de métal actif augmente. Si le collecteur de courant était alors, ne serait-ce qu'en quelques endroits, en contact avec les parois, il risquerait de se déformer ou de se rompre. La distance entre les bords du collecteur de courant et la face intérieure des parois du boîtier rigide est de préférence au plus égale à quelques millimètres.

Le collecteur de courant est relié électriquement à un conducteur électronique souple formé par une grille ou une feuille métallique souple, de préférence une grille souple en acier. Cette grille métallique souple recouvre au moins une partie, de préférence la totalité de la surface du collecteur de courant, jouant alors également un rôle de soutien mécanique pour le collecteur de courant. Afin d'améliorer le contact électrique entre le collecteur de courant et le conducteur électronique, une laque d'argent est de préférence appliquée au niveau de leur zone de contact. Pour que cela soit possible, la sixième face du boîtier rigide c'est-à-dire celle qui se trouve opposée à celle formée par la membrane d'électrolyte, ne sera coulée qu'après l'assemblage de l'ensemble des autres composants du précurseur. Le procédé de fabrication du précurseur de compartiment rigide d'électrode négative sera décrit plus en détail à l'Exemple 1.

Le précurseur de compartiment d'électrode négative de la présente invention comprend en outre de préférence au moins un bloc de matériau élastique, appliqué contre le collecteur de courant et remplissant essentiellement tout l'espace intérieur défini par les parois du boîtier rigide et l'électrolyte solide, ledit bloc exerçant grâce à son élasticité une légère pression sur le collecteur de courant de manière à le maintenir appliqué contre la membrane d'électrolyte solide.

Ce bloc de matériau élastique est de préférence une mousse élastique et a des dimensions telles qu'il remplit essentiellement tout l'espace intérieur du précurseur de compartiment d'électrode négative de la présente invention. Ce bloc de matériau élastique n'est pas essentiel pour la présente invention mais correspond simplement à un mode de réalisation particulier. En effet le compartiment d'électrode négative peut fonctionner en l'absence d'un tel matériau qui a pour fonction essentiellement de supporter le collecteur de courant sur toute la surface de celui-ci et d'exercer une légère pression sur celui-ci de manière à le presser en direction de la membrane d'électrolyte solide.

Comme déjà mentionné précédemment, pendant la phase d'introduction du métal actif, le collecteur de courant s'éloignera progressivement de la membrane d'électrolyte solide. Le bloc de mousse sera alors comprimé tout aussi progressivement exerçant ainsi, tout au long de cette étape, une contre-pression uniforme sur le collecteur de courant. L'élasticité du bloc de mousse lui permettra ensuite, au cours de la décharge de la batterie, de se dilater de nouveau et de reprendre sa forme initiale.

On peut citer à titre d'exemple de mousses élastiques utilisables les mousses de poly(chloroprène) (Néoprène®), de préférence les mousses de néoprène commercialisées sous la dénomination Bulatex®, en particulier Bulatex C166, par la société Hutchinson. Un autre exemple d'une mousse utilisable présentant le comportement élastique nécessaire est le produit Sylomer® G, une mousse de poly(éther uréthane) commercialisée par la société Plastiform's.

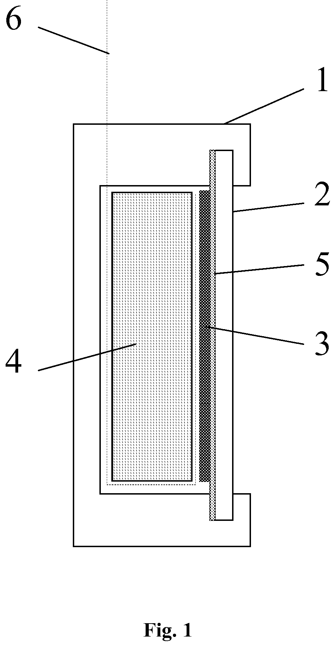

Le précurseur de compartiment d'électrode négative peut contenir une seule membrane d'électrolyte négative formant ou fermant une seule face dudit compartiment. Il ne s'agit toutefois que d'un des deux modes de réalisation préférés du précurseur de la présente invention, représenté à la figure 1 annexée.

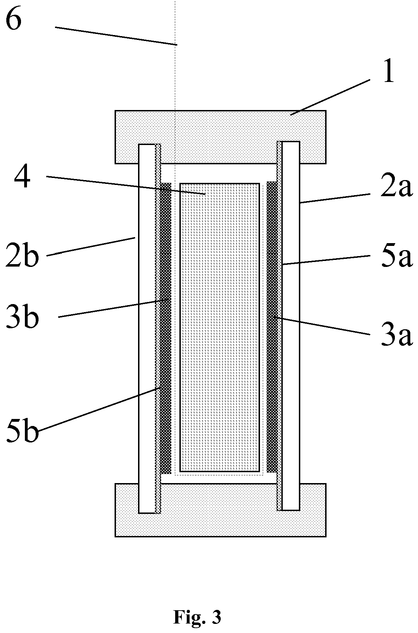

Dans un autre mode de réalisation, représenté à la figure 3, le compartiment contient deux membranes d'électrolyte solide. Ces deux membranes d'électrolyte solide forment ou ferment deux faces du précurseur, de préférence deux faces opposées l'une à l'autre. Un tel compartiment «double face » contenant une double électrode négative peut, dans une batterie, être associé à un ou deux, de préférence deux, compartiments d'électrode positive, ce qui constitue une économie de place par rapport au premier mode de réalisation.

La présente invention a également pour objet un procédé de fabrication d'un compartiment d'électrode négative pour batteries métal-air rechargeables, utilisant le précurseur de compartiment décrit ci-dessus.

Ce procédé comprend les étapes successives suivantes

(a) la mise en contact d'une partie ou de toute la surface extérieure de la membrane d'électrolyte solide d'un précurseur de compartiment selon l'invention, avec un électrolyte liquide contenant les cations du métal alcalin qui formera la matière active de l'électrode négative,

(b) application d'un potentiel réducteur entre une électrode négative, formée par le conducteur électronique et le collecteur de courant, et une électrode positive plongée dans l'électrolyte liquide contenant les cations du métal alcalin,

(c) maintien du potentiel réducteur entre l'électrode négative et l'électrode positive pendant une durée suffisante pour introduire dans le précurseur de compartiment d'électrode négative, entre le collecteur de courant et la membrane d'électrolyte solide, la quantité de métal alcalin souhaitée.

L'électrolyte liquide est de préférence une solution aqueuse de LiOH lorsqu'on souhaite fabriquer un compartiment d'électrode négative pour des batteries lithium-air, ou bien une solution aqueuse de NaOH lorsque le métal actif est le sodium. La concentration en hydroxyde de métal alcalin de l'électrolyte liquide est de préférence au moins égale à 1 mol.l$^{-1}$ et peut aller jusqu'à la saturation ou au-delà. L'électrolyte liquide peut en effet être une solution saturée d'hydroxyde de métal alcalin contenant de l'hydroxyde de métal alcalin à l'état solide. Cet hydroxyde de métal alcalin sert de réserve d'ions alcalins qui, après réduction au moment de la recharge, forment le métal actif dans le compartiment d'électrode négative.

L'électrode positive utilisée pour la fabrication du compartiment d'électrode négative peut être n'importe quel métal ou alliage stable dans l'électrolyte aqueux et aux potentiels d'oxydation des ions hydroxyle de l'électrolyte en dioxygène. Ces métaux ou alliages sont par exemple l'acier, le nickel et le platine.

Le potentiel réducteur appliqué entre l'électrode négative et l'électrode positive est maintenu de préférence à une valeur comprise entre -3,5 et -4,4 V. Ce potentiel doit en effet être suffisamment élevé (négatif) pour que le Li$^+$ soit réduit en Li métal (E° = -3,04 V) et les ions hydroxyle soient oxydés en dioxygène (E° = +0,4 V). Ce potentiel est appliqué pendant une durée et avec une intensité de courant suffisants pour obtenir la charge souhaitée qui est de préférence comprise entre 1mAh/cm$^2$ et 10 Ah/cm$^2$.

Le procédé d'introduction de lithium ou de sodium métallique dans le compartiment d'électrode par voie électrolytique présente l'avantage de pouvoir être mis en œuvre dans une atmosphère non contrôlée (inerte, anhydre) grâce au fait que la formation du lithium ou sodium métallique, par réduction des cations correspondants, ne se fait qu'à l'intérieur du compartiment étanche, c'est-à-dire à l'abri de l'humidité et de l'air. Ceci n'est pas le cas du procédé divulgué dans WO 2007/021717 qui comprend une étape de manipulation de lithium métallique qui doit impérativement être mise en œuvre en chambre sèche ou boîte à gants.

La présente invention a en outre pour objet un compartiment d'électrode négative obtenu ou susceptible d'être obtenu par le procédé décrit ci-dessus. Un tel compartiment comprend, en plus des caractéristiques techniques du précurseur de compartiment décrit ci-dessus, une couche de métal alcalin actif, généralement du lithium ou du sodium, insérée entre le collecteur de courant et le revêtement de protection. Dans ce compartiment d'électrode, le bloc de mousse élastique est comprimé en raison de la présence de cette couche de métal alcalin actif, introduite au cours du procédé de préparation.

Le compartiment d'électrode négative selon l'invention se distingue de celui décrit dans WO 2007/021717 entre autres par l'absence de joints souples et par la présence d'un cadre rigide supportant l'électrolyte solide et permettant de réduire l'épaisseur de celui-ci et d'améliorer ainsi le rendement électrique de la batterie.

Enfin, la présente invention a pour objet une batterie air-métal électriquement rechargeable, comprenant :

- un compartiment d'électrode négative tel que décrit ci-dessus,
- un électrolyte liquide formé par une solution aqueuse concentrée d'un sel du métal alcalin présent dans le compartiment d'électrode négative, de préférence du LiOH ou du NaOH,
- une électrode positive à air, et
- une électrode positive à dégagement d'oxygène.

La présente invention sera décrite plus en détail ci-après à l'aide des figures annexées dans lesquelles,

- la Figure 1 est une coupe transversale d'un précurseur de compartiment d'électrode négative selon l'invention,
- la Figure 2 est une coupe transversale d'un compartiment d'électrode négative selon l'invention obtenu à partir du précurseur représenté à la Figure 1,
- la Figure 3 est une coupe transversale d'un compartiment d'électrode négative à double face comportant non pas une mais deux membranes d'électrolyte solide et
- la Figure 4 représente une batterie rechargeable métal-air contenant un compartiment d'électrode négative selon l'invention.

Le précurseur de compartiment d'électrode négative représenté à la figure 1 comprend un boîtier rigide 1 de forme parallélépipédique. Ce boîtier est fermé sur un de ses côtés par une membrane d'électrolyte solide 2. Les bords de cette membrane d'électrolyte solide sont ancrés dans la résine du boîtier rigide. La membrane d'électrolyte solide 2 est recouverte sur toute sa surface intérieure, c'est-à-dire sur toute sa surface tournée vers l'intérieur du compartiment, d'un revêtement de protection 5 conducteur d'ions alcalins. Ce revêtement est ancré, comme l'électrolyte solide, dans la paroi du boîtier rigide. Sur ce revêtement protecteur 5 est appliqué un collecteur de courant 3. Ce collecteur de courant, contrairement à la membrane d'électrolyte solide et au revêtement de protection, n'est pas en contact physique avec les parois du boîtier 1. La presque totalité de l'espace restant est remplie par une mousse élastique 4 non comprimée. Un conducteur électronique 6 est en contact physique et électrique avec la totalité de la surface du collecteur de courant 3. Ce conducteur électronique entoure partiellement le bloc de mousse 4 et s'étend à travers la paroi du boîtier 1 vers l'extérieur du compartiment.

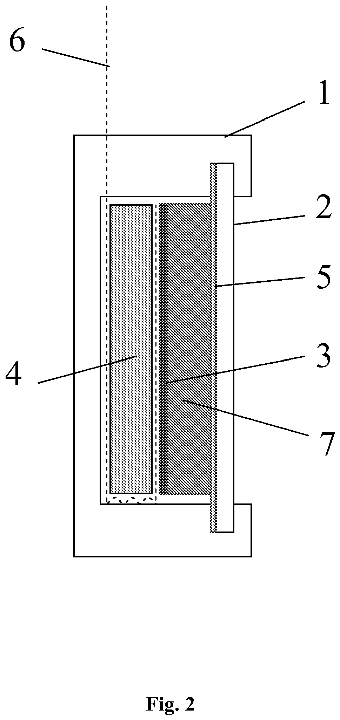

Le compartiment d'électrode négative représenté à la figure 2 a été obtenu à partir du précurseur de la figure 1 et contient par conséquent tous les composants de ce dernier, à savoir le boîtier rigide 1, la membrane d'électrolyte solide 2 avec le revêtement de protection 5, le collecteur de courant 3, la mousse élastique 4 et le conducteur électronique 6. La différence essentielle par rapport au précurseur de la figure 1 est la présence d'une couche de métal actif 7, par exemple du lithium métallique, introduite par un procédé électrochimique à partir d'un électrolyte aqueux contenant du LiOH. La présence de cette couche supplémentaire, se traduit par la compression de la mousse élastique 4.

Sur la figure 3 est représentée une variante du précurseur de compartiment d'électrode négative de la figure 1 dans laquelle chacune de deux faces du compartiment est formée par une membrane d'électrolyte solide. Ce précurseur a ainsi une structure symétrique au centre de laquelle se trouve le bloc de mousse élastique 4 en contact, sur ses deux faces, avec le conducteur électronique 6 relié à deux collecteurs de courant 3a, 3b. L'espace intérieur du compartiment est limité sur deux faces par une membrane d'électrolyte solide 2a,2b, chacune de ces deux membranes étant protégée, sur toute sa surface intérieure, par un revêtement de protection 5a,5b.

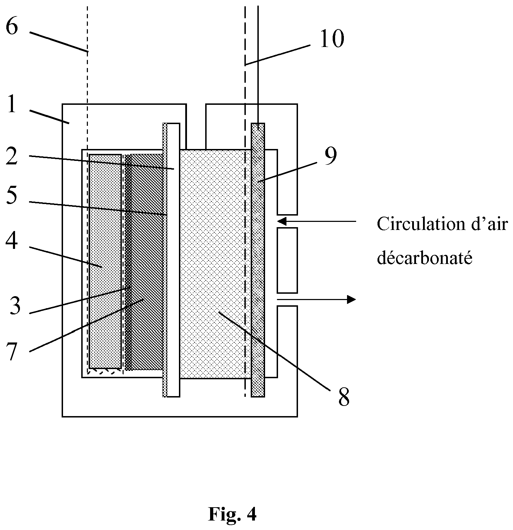

Enfin, la Figure 4 montre un mode de réalisation d'une batterie contenant un compartiment d'électrode négative tel que représenté à la figure 2. Dans cette batterie, la face extérieure de la membrane d'électrolyte solide 2 est en contact sur toute sa surface, avec un électrolyte liquide aqueux 8, par exemple une solution aqueuse concentrée de LiOH. Cet électrolyte liquide est en contact avec deux électrodes positives : une électrode à air 9 active pendant la décharge de la batterie et une électrode de dégagement d'oxygène 10 qui sera active pendant la charge de la batterie. L'électrode à air est une électrode poreuse en contact avec une atmosphère contrôlée, c'est-à-dire avec un circuit d'air décarbonaté. La présence du dioxyde de carbone dans l'air est en effet néfaste pour l'électrode à air car ce gaz se dissout au niveau du point triple dans l'électrolyte liquide basique et forme des carbonates insolubles qui empêchent rapidement le fonctionnement de l'électrode à air.

**Exemple 1**

Fabrication d'un compartiment d'électrode négative selon l'invention

On introduit dans un moule siliconé ayant les dimensions du compartiment d'électrode que l'on souhaite produire une membrane d'électrolyte solide en LISICON revêtue, sur une seule de ses faces, d'un revêtement protecteur en LiPON, sur lequel est déposé le collecteur de courant en acier (généralement par évaporation ou pulvérisation cathodique). Les dimensions de ce collecteur de courant sont inférieures à celles de la surface du revêtement LiPON.

Les deux faces de cet ensemble LISICON/LiPON/collecteur de courant sont préalablement protégées par une feuille de silicone de manière à ne laisser libre que les bords de cette structure. On veillera à cette occasion à ce que la feuille de silicone recouvre une surface plus grande que celle du collecteur de courant de manière à éviter que celui-ci vienne ensuite en contact avec les parois de résine. Une résine époxyde durcissable à froid (Epofix) est mélangée avec son durcisseur et est coulée dans le moule siliconé contenant la membrane d'électrolyte solide recouvert par le revêtement protecteur. La coulée de la résine liquide est mise en oeuvre de manière à ce que la structure LISICON/Li-PON/collecteur de courant soit, sur toute sa périphérie, prise dans la résine. Autrement dit la résine liquide entoure l'ensemble des bords de ladite membrane et forme, après durcissement, quatre parois perpendiculaires à la face formée par la structure LISICON/LiPON/collecteur de courant. Bien entendu la feuille protectrice de silicone est enlevée au plus tard avant introduction des autres composants du précurseur de compartiment.

Sur le collecteur de courant (feuille ou couche mince d'acier) on colle à l'aide d'une laque d'argent une grille souple en acier. Puis, sur cette grille souple en acier on pose un bloc de mousse en néoprène Bulatex C166 (Hutchinson) découpé au préalable aux dimensions de l'espace intérieur du compartiment. On ferme ensuite hermétiquement le compartiment en immergeant dans un bain de résine liquide durcissable (Epofix®) la face encore ouverte du compartiment en veillant à laisser le conducteur électronique traverser cette paroi formée en dernier.

Après durcissement de la résine, le précurseur de compartiment d'électrode négative est prêt.

Le métal actif est introduit par voie électrochimique lors d'une première charge à partir d'un électrolyte aqueux contenant du LiOH, en contact avec la membrane d'électrolyte solide.

**Revendications**

1. Précurseur de compartiment d'électrode négative pour batteries métal-air rechargeables, comprenant

   (a) un boîtier rigide (1) en résine, ouvert sur au moins un de ses côtés
   (b) au moins une membrane d'électrolyte solide (2) conducteur d'ions alcalins fermant complètement et de manière étanche le ou les côté(s) ouvert(s) du boîtier rigide,
   (c) au moins un revêtement de protection (5) inerte vis-à-vis des métaux alcalins, recouvrant de préférence complètement la face intérieure de la membrane d'électrolyte solide (2),
   (d) au moins un collecteur de courant (3) métallique en forme de revêtement déposé sur la face intérieure du revêtement de protection (5), ledit collecteur de courant recouvrant presque toute la face intérieure de ce revêtement de protection sans toutefois être en contact, au niveau de ses bords, avec le boîtier rigide (1), et
   (e) au moins un conducteur électronique souple (6) en forme de grille ou de feuille, traversant de manière étanche une des parois du boîtier rigide et relié au collecteur de courant (3).

2. Précurseur de compartiment d'électrode négative selon la revendication 1, **caractérisé par le fait qu'**il contient une seule membrane d'électrolyte solide (2).

3. Précurseur de compartiment d'électrode négative selon la revendication 1, **caractérisé par le fait qu'**il contient deux membranes d'électrolyte solide (2a,2b), lesdites deux membranes d'électrolyte solide formant de préférence deux faces opposées du précurseur de compartiment d'électrode négative.

4. Précurseur de compartiment d'électrode selon l'une quelconque des revendications précédentes, **caractérisé par le fait qu'**il comprend en outre au moins un bloc de matériau (4) élastique appliqué contre le collecteur de courant (3) et remplissant essentiellement tout l'espace intérieur défini par les parois du boîtier rigide et l'électrolyte solide (2), ledit bloc exerçant, grâce à son élasticité, une légère pression sur le collecteur de courant de manière à le maintenir appliqué contre la membrane d'électrolyte solide.

5. Précurseur de compartiment d'électrode négative selon l'une quelconque des revendications précédentes, **caractérisé par le fait que** la membrane d'électrolyte solide (2) est une membrane céramique conductrice d'ions sodium ou d'ions lithium, de préférence d'ions lithium.

**6.** Précurseur de compartiment d'électrode négative selon l'une quelconque des revendications précédentes, **caractérisé par le fait que** la membrane d'électrolyte solide est une membrane céramique de formule

$$Li_{1-x}(M, Ga, Al)_{x'}(Ge_{1-y}Ti_y)_{2-x}(PO_4)_3$$

où M est un ou plusieurs métaux choisis parmi Nd, Sm, Eu, Gd, Tb, Dy, Ho, Er, Tm et Yb, ou une membrane céramique de formule $Na_{1+x}Zr_2S_x,P_{3-x}O_{12}$ où $0 \leq x \leq 3$.

**7.** Précurseur de compartiment d'électrode négative selon l'une quelconque des revendications précédentes, **caractérisé par le fait que** la membrane d'électrolyte solide a une épaisseur comprise entre 30 et 500 $\mu$m, de préférence entre 50 et 160 $\mu$m.

**8.** Précurseur de compartiment d'électrolyte négative selon l'une quelconque des revendications précédentes, **caractérisé par le fait que** la membrane d'électrolyte solide est soutenue par une structure de renforcement laissant libre la plus grande surface de la membrane.

**9.** Précurseur de compartiment d'électrode négative selon l'une quelconque des revendications précédentes, **caractérisé par le fait que** le revêtement de protection (5) est un revêtement à base de $Li_3N$, $Li_3P$, LiI, LiBr, LiF, oxynitrure de lithium et de phosphore (LiPON) ou d'oxynitrure de sodium et de phosphore (NaPON), de préférence un revêtement LiPON ou NaPON.

**10.** Précurseur de compartiment d'électrode négative selon l'une quelconque des revendications 4-9, **caractérisé par le fait que** le bloc de matériau (4) élastique est une mousse de poly(chloroprène).

**11.** Précurseur de compartiment d'électrode négative selon l'une quelconque des revendications précédentes, **caractérisé par le fait qu'**une laque d'argent est appliquée au niveau de la zone de contact entre le collecteur de courant (3) et le conducteur électronique (6).

**12.** Précurseur de compartiment d'électrode négative selon l'une quelconque des revendications précédentes, **caractérisé par le fait que** le boîtier rigide (1) est en résine thermodurcissable ou durcissable à froid, de préférence une résine époxy durcissable à froid.

**13.** Procédé de fabrication d'un compartiment d'électrode négative pour batteries métal-air rechargeable, comprenant

- la mise en contact d'une partie ou de toute la surface extérieure de la membrane d'électrolyte solide d'un précurseur de compartiment selon l'une quelconque des revendications précédentes, avec un électrolyte liquide contenant les cations du métal alcalin qui formera la matière active de l'électrode négative,
- l'application d'un potentiel réducteur entre l'électrode négative, formée par le conducteur électronique et le collecteur de courant, et une électrode positive plongée dans l'électrolyte liquide contenant les cations du métal alcalin,
- le maintien du potentiel réducteur entre l'électrode négative et l'électrode positive pendant une durée suffisante pour introduire dans le précurseur de compartiment d'électrode négative, entre le collecteur de courant et la membrane d'électrolyte solide, la quantité de métal alcalin souhaitée.

**14.** Procédé de fabrication selon la revendication 13, **caractérisé par le fait que** l'électrolyte liquide est une solution aqueuse de LiOH ou de NaOH.

**15.** Procédé de fabrication selon l'une des revendications 13 à 14, **caractérisé par le fait que** le potentiel entre l'électrode négative et l'électrode positive est maintenue à une valeur comprise entre -3,5 et -4,4 V.

**16.** Compartiment d'électrode négative susceptible d'être obtenu par un procédé selon l'une quelconque des revendications 13 à 15, **caractérisé par le fait qu'**il comprend, en plus des caractéristiques techniques du précurseur de compartiment, définies dans l'une quelconque des revendications 4 à 11, une couche de métal alcalin actif (7), insérée entre le collecteur de courant (3) et le revêtement de protection (5), et **par le fait que** le bloc de mousse (4) élastique est comprimé.

**17.** Batterie air-métal rechargeable, comprenant

- un compartiment d'électrode négative selon la revendication 16,
- un électrolyte liquide (8) formé par une solution aqueuse concentrée d'un sel du métal alcalin présent dans le compartiment d'électrode négative, de préférence du LiOH ou du NaOH,
- au moins une électrode positive à air (9), et
- au moins une électrode positive à dégagement d'oxygène (10).

**Patentansprüche**

**1.** Negativelektrodenraum-Vorläufer für wiederaufladbare Metall-Luft-Batterien, umfassend

(a) ein starres Gehäuse (1) aus Harz, welches an wenigstens einer seiner Seiten offen ist,
(b) wenigstens eine Alkali-Ionen leitende Festelektrolytmembran (2), welche die offene(n) Seite(n) des starren Gehäuses vollständig und abdichtend verschließt,
(c) wenigstens eine gegenüber Alkalimetallen inerte Schutzbeschichtung (5), welche bevorzugt die Innenseite der Festelektrolytmembran (2) vollständig bedeckt,
(d) wenigstens einen metallischen Stromkollektor (3) in Form einer auf der Innenseite der Schutzbeschichtung (5) aufgebrachten Beschichtung, wobei der Stromabnehmer nahezu die gesamte Innenseite dieser Schutzbeschichtung bedeckt, aber an seinen Rändern nicht mit dem starren Gehäuse (1) in Kontakt steht, und
(e) wenigstens einen flexiblen elektronischen Leiter (6) in Form eines Gitters oder einer Folie, der in abgedichteter Weise durch eine der Wände des starren Gehäuses verläuft und mit dem Stromkollektor (3) verbunden ist.

**2.** Negativelektrodenraum-Vorläufer nach Anspruch 1, **dadurch gekennzeichnet, dass** er eine einzige Festelektrolytmembran (2) umfasst.

**3.** Negativelektrodenraum-Vorläufer nach Anspruch 1, **dadurch gekennzeichnet, dass** er zwei Festelektrolytmembranen (2a, 2b) umfasst, wobei die beiden Festelektrolytmembranen bevorzugt zwei gegenüberliegende Flächen des Negativelektrodenraum-Vorläufers bilden.

**4.** Elektrodenraumvorläufer nach einem der vorhergehenden Ansprüche, **dadurch gekennzeichnet, dass** dieser ferner wenigstens einen elastischen Materialblock (4) aufweist, der an dem Stromkollektor (3) angelegt ist und im Wesentlichen den gesamten durch die Wände des starren Gehäuses und den Festelektrolyten (2) definierten Innenraum ausfüllt, wobei der Block aufgrund seiner Elastizität einen leichten Druck auf den Stromkollektor ausübt, um ihn an der Festelektrolytmembran angelegt zu halten.

**5.** Negativelektrodenraum-Vorläufer nach einem der vorhergehenden Ansprüche, **dadurch gekennzeichnet, dass** die Festelektrolytmembran (2) eine Keramikmembran ist, welche Natriumionen oder Lithiumionen, bevorzugt Lithiumionen, leitet.

**6.** Negativelektrodenraum-Vorläufer nach einem der vorhergehenden Ansprüche, **dadurch gekennzeichnet, dass** die Festelektrolytmembran eine Keramikmembran mit der Formel

$$Li_{1-x}(M, Ga, Al)_x,(Ge_{1-y}Ti_y)_{2-x}(PO_4)_3$$

ist, wobei M für ein oder mehrere Metalle steht, gewählt aus Nd, Sm, Eu, Gd, Tb, Dy, Ho, Er, Tm und Yb, oder für eine Keramikmembran der Formel $Na_{1+x}Zr_2S_x$, $P_{3-x}O_{12}$ steht, wobei $0 \leq x \leq 3$ ist.

**7.** Negativelektrodenraum-Vorläufer nach einem der vorhergehenden Ansprüche, **dadurch gekennzeichnet, dass** die Festelektrolytmembran eine Dicke zwischen 30 und 500 $\mu m$, bevorzugt zwischen 50 und 160 $\mu m$, aufweist.

**8.** Negativelektrodenraum-Vorläufer nach einem der vorhergehenden Ansprüche, **dadurch gekennzeichnet, dass** die Festelektrolytmembran von einer Verstärkungsstruktur gestützt ist, die die größere Oberfläche der Membran frei lässt.

**9.** Negativelektrodenraum-Vorläufer nach einem der vorhergehenden Ansprüche, **dadurch gekennzeichnet, dass** die Schutzbeschichtung (5) eine Beschichtung auf der Basis von $Li_3N$, $Li_3P$, LiI, LiBr, LiF, Lithium-Phosphor-Oxynitrid (LiPON) oder Natrium-Phosphor-Oxynitrid (NaPON) ist, bevorzugt eine LiPON- oder NaPON-Beschichtung.

10. Negativelektrodenraum-Vorläufer nach einem der Ansprüche 4 bis 9, **dadurch gekennzeichnet, dass** der elastische Materialblock (4) ein Poly(chloropren)-Schaumstoff ist.

11. Negativelektrodenraum-Vorläufer nach einem der vorhergehenden Ansprüche, **dadurch gekennzeichnet, dass** ein Silberlack auf der Kontaktfläche zwischen dem Stromkollektor (3) und dem elektronischen Leiter (6) aufgebracht ist.

12. Negativelektrodenraum-Vorläufer nach einem der vorhergehenden Ansprüche, **dadurch gekennzeichnet, dass** das starre Gehäuse (1) aus einem wärmehärtenden oder kalthärtenden Harz, bevorzugt einem kalthärtenden Epoxydharz, hergestellt ist.

13. Verfahren zur Herstellung eines Negativelektrodenraums für wiederaufladbare Metall-Luft-Batterien, umfassend

- Inkontaktbringen eines Teils oder der Gesamtheit der Außenfläche der Festelektrolytmembran eines Elektrodenraumvorläufers nach einem der vorhergehenden Ansprüche mit einem flüssigen Elektrolyten, der die Kationen des Alkalimetalls umfasst, welches das aktive Material der negativen Elektrode bildet,
- Anlegen eines Reduktionspotentials zwischen der durch den elektronischen Leiter und den Stromkollektor gebildeten negativen Elektrode und einer in den die Kationen des Alkalimetalls umfassenden flüssigen Elektrolyten getauchten positiven Elektrode,
- Aufrechterhalten des Reduktionspotentials zwischen der negativen Elektrode und der positiven Elektrode über einen Zeitraum, der ausreicht, um die gewünschte Menge an Alkalimetall in den Negativelektrodenraum-Vorläufer zwischen dem Stromkollektor und der Festelektrolytmembran einzuführen.

14. Herstellungsverfahren nach Anspruch 13, **dadurch gekennzeichnet, dass** der flüssige Elektrolyt eine wässrige Lösung von LiOH oder NaOH ist.

15. Herstellungsverfahren nach einem der Ansprüche 13 bis 14, **dadurch gekennzeichnet, dass** das Potential zwischen der negativen Elektrode und der positiven Elektrode auf einem Wert zwischen -3,5 und -4,4 V gehalten wird.

16. Negativelektrodenraum, erhältlich durch ein Verfahren nach einem der Ansprüche 13 bis 15, **dadurch gekennzeichnet, dass** er zusätzlich zu den technischen Eigenschaften des Elektrodenraumvorläufers nach einem der Ansprüche 4 bis 11 eine Schicht aus aktivem Alkalimetall (7) umfasst, welche zwischen dem Stromkollektor (3) und der Schutzbeschichtung (5) eingefügt ist, und dass der elastische Schaumstoffblock (4) komprimiert ist.

17. Wiederaufladbare Luft-Metall-Batterie, umfassend

- einen Negativelektrodenraum nach Anspruch 16,
- einen flüssigen Elektrolyten (8), der durch eine konzentrierte wässrige Lösung eines Salzes des in dem Negativelektrodenraum vorhandenen Alkalimetalls, bevorzugt LiOH oder NaOH, gebildet ist,
- wenigstens eine positive Luftelektrode (9), und
- wenigstens eine Sauerstoff freisetzende positive Elektrode (10).

**Claims**

1. A negative electrode compartment precursor for rechargeable metal-air batteries, comprising

(a) a rigid resin casing (1) open on at least one of its sides,
(b) at least one solid electrolyte membrane (2) that conducts alkali metal ions, which fully closes the open side or sides of the rigid casing in a leaktight manner,
(c) at least one protective coating (5) which is inert with respect to alkali metals, covering the inner face of the solid electrolyte membrane (2) preferably fully,
(d) at least one metallic current collector (3) in the form of a coating deposited on the inner face of the protective coating (5), said current collector covering almost all of the inner face of this protective coating but without being in contact with the rigid casing (1) on its edges, and
(e) at least one flexible electronic conductor (6) in the form of a grid or sheet, passing in a leaktight manner through one of the walls of the rigid casing and connected to the current collector (3).

2.  The negative electrode compartment precursor as claimed in claim 1, wherein it contains a single solid electrolyte membrane (2).

3.  The negative electrode compartment precursor as claimed in claim 1, wherein it contains two solid electrolyte membranes (2a, 2b), said two solid electrolyte membranes preferably forming two opposite faces of the negative electrode compartment precursor.

4.  The electrode compartment precursor as claimed in any one of the preceding claims, wherein it furthermore comprises at least one block (4) of resilient material applied against the current collector (3) and filling essentially all of the inner space defined by the walls of the rigid casing and the solid electrolyte (2), said block exerting, owing to its resilience, a slight pressure on the current collector so as to keep it applied against the solid electrolyte membrane.

5.  The negative electrode compartment precursor as claimed in any one of the preceding claims, wherein the solid electrolyte membrane (2) is a ceramic membrane which conducts sodium ions or lithium ions, preferably lithium ions.

6.  The negative electrode compartment precursor as claimed in any one of the preceding claims, wherein the solid electrolyte membrane is a ceramic membrane of formula

$$Li_{1-x} (M, Ga, Al)_x (Ge_{1-y}Ti_y)_{2-x}(PO_4)_3$$

where M is one or more metals selected from Nd, Sm, Eu, Gd, Tb, Dy, Ho, Er, Tm and Yb, or a ceramic membrane of formula $Na_{1+x}Zr_2S_xP_{3-x}O_{12}$ where $0 \leq x \leq 3$.

7.  The negative electrode compartment precursor as claimed in any one of the preceding claims, wherein the solid electrolyte membrane has a thickness of between 30 and 500 $\mu$m, preferably between 50 and 160 $\mu$m.

8.  The negative electrode compartment precursor as claimed in any one of the preceding claims, wherein the solid electrolyte membrane is supported by a reinforcing structure which leaves the majority of the surface area of the membrane free.

9.  The negative electrode compartment precursor as claimed in any one of the preceding claims, wherein the protective coating (5) is a coating based on $Li_3N$, $Li_3P$, LiI, LiBr, LiF, lithium phosphorus oxynitride (LiPON) or sodium phosphorus oxynitride (NaPON), preferably a LiPON or NaPON coating.

10. The negative electrode compartment precursor as claimed in one of claims 4 to 9, wherein the block of resilient material (4) is a poly(chloroprene) foam.

11. The negative electrode compartment precursor as claimed in any one of the preceding claims, wherein a silver lacquer is applied on the contact region between the current collector (3) and the electronic conductor (6).

12. The negative electrode compartment precursor as claimed in any one of the preceding claims, wherein the rigid casing (1) is made of thermosetting or cold-curing resin, preferably a cold-curing epoxy resin.

13. A method of manufacturing a negative electrode compartment for rechargeable metal-air batteries, comprising

- bringing some or all of the external surface of the solid electrolyte membrane of a compartment precursor as claimed in any one of the preceding claims in contact with a liquid electrolyte containing cations of the alkali metal which will form the active material of the negative electrode,
- applying a reducing potential between the negative electrode, formed by the electronic conductor and the current collector, and a positive electrode extending into the liquid electrolyte containing the cations of the alkali metal,
- maintaining the reducing potential between the negative electrode and the positive electrode for a sufficient time to introduce the desired quantity of alkali metal into the negative electrode compartment precursor, between the current collector and the solid electrolyte membrane.

14. The manufacturing method as claimed in claim 13, wherein the liquid electrolyte is an aqueous solution of LiOH or NaOH.

**15.** The manufacturing method as claimed in one of claims 13 and 14, wherein the potential between the negative electrode and the positive electrode is maintained at a value of between -3.5 and -4.4 V.

**16.** A negative electrode compartment which can be obtained by a method as claimed in one of claims 13 to 15, wherein it comprises, further to the technical characteristics of the compartment precursor which are defined in any one of claims 4 to 11, a layer of active alkali metal (7) inserted between the current collector (3) and the protective coating (5), and in that the block of resilient foam (4) is compressed.

**17.** A rechargeable air-metal battery, comprising

- a negative electrode compartment as claimed in claim 16,
- a liquid electrolyte (8) formed by a concentrated aqueous solution of a salt of the alkali metal present in the negative electrode compartment, preferably LiOH or NaOH,
- at least one positive air electrode (9), and
- at least one positive oxygen liberation electrode (10).

**Fig. 1**

**Fig. 2**

Fig. 3

**Fig. 4**

Circulation d'air
décarbonaté

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007021717 A
- US 20070051620 A
- WO 2007021717L A
- US 6485622 B

**Littérature non-brevet citée dans la description**

- **N. GASMI et al.** *J. of Sol-Gel Science and Technology,* vol. 4 (3), 231-237
- **YU et al.** *J. Electrochem. Soc.,* 1997, vol. 144 (2), 524
- **S. CHUN et al.** *Proc. 124th Meeting Electrochem Soc.,* 2008, 195